## Europäisches Patentamt

## European Patent Office

## Office européen des brevets

(19)

(11) Veröffentlichungsnummer: **0 333 928**
**A2**

(12)

# EUROPÄISCHE PATENTANMELDUNG

(21) Anmeldenummer: **88121620.4**

(22) Anmeldetag: **23.12.88**

(51) Int. Cl.4: **G01D 5/249**

(30) Priorität: **22.03.88 DE 3809639**

(43) Veröffentlichungstag der Anmeldung:
**27.09.89 Patentblatt 89/39**

(84) Benannte Vertragsstaaten:
**BE DE FR GB NL SE**

(71) Anmelder: **EGM Entwicklungsgesellschaft für Montagetechnik GmbH**
**Bayernstrasse 17**
**D-3012 Langenhagen(DE)**

(72) Erfinder: **Badur, Klaus**
**Scheelenkamp 14**
**D-3008 Garbsen 4(DE)**
Erfinder: **Schmidt, Thomas, Dipl-.Ing.**
**Eissendorfer Pferdeweg 44**
**D-2100 Hamburg 90(DE)**
Erfinder: **Busch, Klaus-Joachim, Dipl.-Ing.**
**Welfenallee 20 A**
**D-3100 Celle(DE)**

(74) Vertreter: **Möller, Friedrich, Dipl.-Ing. et al**
**Meissner, Bolte & Partner Patentanwälte**
**Hollerallee 73**
**D-2800 Bremen 1(DE)**

(54) **Verfahren und Vorrichtung zur indirekten Wegmessung.**

(57) Zur Istpositionbestimmung bei der Lageregelung von Roboterachsen werden hochauflosende Meßeinrichtungen zur indirekten Wegmessung eingesetzt. Bei den bekannten Verfahren werden Einrichtungen eingesetzt, die einen großen apparativen Aufwand erforderlich machen, um Messungen mit ausreichend hoher Auflösung durchführen zu können. Das neue Verfahren und die entsprechende Vorrichtung soll eine hohe Auflösung bei gleichwohl geringem apparativen Aufwand ermöglichen.

Zur indirekten Wegmessung wird ein mit digitalisierter Weg- bzw. Positionsinformation versehener Informationsträger abgetastet. Die Information ist hierbei in Form von bits auf einer Speicherscheibe nach einem von der Herstellung sogenannter Compact Discs her bekannten Verfahren abgespeichert. Aufgrund der so erzielbaren hohen Informationsdichte sind sehr hohe Auflösungen bei der indirekten Wegmessung möglich.

Indirekte Wegmessung bei der Positionierung von Roboterachsen.

## Verfahren und Vorrichtung zur indirekten Wegmessung

Die Erfindung betrifft ein Verfahren zur indirekten Wegmessung nach dem Oberbegriff des Patentanspruches 1 bzw. eine Vorrichtung zur Durchführung des Verfahrens nach dem Oberbegriff des Patentanspruches 3. Insbesondere dreht es sich hierbei darum, daß die Positionierung von Werkzeug- oder Roboterachsen gemessen werden soll.

Ein entscheidendes Kriterium für die Einsatzmöglichkeiten von Robotern ist die mit diesen erzielbare Positioniergenauigkeit. Aus diesem Grund ist es unerlässlich, daß Roborter mit entsprechenden Sensoren ausgestattet sind, die eine Reproduzierbarkeit der Bewegungsabläufe ermöglichen. In den allermeisten Fällen ist eine direkte Wegmessung, z.B. die Messung des Abstandes zwischen Werkzeug und Werkstück nicht möglich, vielmehr muß eine indirekte Wegmessung vorgenommen werden. Hierbei hat es sich gezeigt, daß bei der Positionierung von direkt angetriebenen Roboterachsen ein hoher apparativer und damit kostenintensiver Aufwand notwendig ist, um Messungen von ausreichender Genauigkeit durchführen zu können.

Bekannt sind Weg- oder Winkelcodierer, die einen Informationsträger, insbesondere eine optisch lesbare, mit einem Strich-Code versehene Codierscheibe aufweisen, die mit der zu überwachenden Roboterachse verbunden wird. Zum einen sind die Strich-Dichten derartiger optischer Informationsträger und die Auflösung des Musters beim Lesen begrenzt, zum anderen besteht das bei indirekter Wegmessung unvermeidbare Problem des Fehlereinflusses zwischen dem Wegmeßsystem und dem Werkzeugteil bzw. dem Ort auf der Roboterachse, dessen Position eigentlich bestimmt werden soll.

Der Erfindung liegt die Aufgabe zugrunde, ein Verfahren und eine Vorrichtung der eingangs genannten Art dahingehend weiterzubilden, daß eine Verbesserung der Meßgenauigkeit bei geringem apparativem Aufwand erreicht wird.

Diese Aufgabe wird durch die im Kennzeichen des Anspruches 1 bzw. des Anspruches 3 angegebenen Merkmale gelöst.

Ein wesentlicher Punkt der Erfindung liegt darin, daß die Positionsinformationen erst nach dem vollständigen Einbau des Systems gespeichert werden, so daß man in einem Kalibrierlauf mittels einer hochpräzisen und gegebenenfalls aufwendigen Apparatur die tatsächlichen Positionen bestimmt und diese Daten dann in das System einspeichert. Diese aufwendige Apparatur kann zur Kalibrierung beliebig vieler Roboter-Positionsfühler dienen, so daß sich der Einsatz der hohen Kosten lohnt. Die Genauigkeit der Meßergebnisse wird besonders hoch, da Fehlereinflüsse während des Kalibrierlaufes kompensiert werden.

Es ist zum Beispiel möglich, zwei voneinander unabhängige Sätze von Informationsdaten während des Kalibrierlaufes zu speichern, die jeweils die bei einer Bewegungsrichtung gemessenen Positionen repräsentieren. Beim aktuellen Einsatz des Roboters kann dann je nach angesteuerter oder gemessener Bewegungsrichtung der eine oder der andere Satz von Daten gelesen werden, so daß Hysteresefehler (z.B. bei einem Spindeltrieb) sich auf einfache Weise ausschalten lassen.

Weiterhin können roboter-spezifische Daten zusätzlich zu den Positionsdaten gespeichert werden, so daß z.B. Grenzwert-Signale oder Signale zur Arbeitstaktsteuerung direkt vom Informationsträgersystem ausgebbar sind.

Von besonderem Vorteil ist die Ausbildung des mit der Roboterachse zu verbindenden Datenträgers als CD-Platten, wie sie aus der Audio- bzw. Datenverarbeitungstechnik bekannt ist. Das System wird mechanisch dann besonders einfach, wenn feststehende, also nicht senkrecht zur Datenspur bewegbare Leseköpfe Verwendung finden. Wenn eine Roboterachse (z.B. bei Vorliegen eines Spindeltriebes) über sehr viele Umdrehungen hinweg fortlaufend hinsichtlich ihrer Position überwacht werden soll, ist es von Vorteil, wenn der bzw. die Abtastköpfe radial zur Datenspur bewegbar sind und spiralig mit dieser mitgeführt werden.

Weitere erfindungswesentliche Einzelheiten ergeben sich aus den Unteransprüchen und der nachfolgenden Beschreibung bevorzugter Ausführungsformen der Erfindung, die im folgenden anhand von Abbildungen näher erläutert wird. Hierbei zeigen:

Fig. 1 eine translatorische Bewegungsachse;

Fig. 2 eine rotatorische Bewegungsachse;

Fig. 3 eine Seitenansicht der rotatorischen Bewegungsachse gemäß Figur 2; und

Fig. 4 ein Blockschaltbild einer weiteren bevorzugten Ausführungsform der Erfindung.

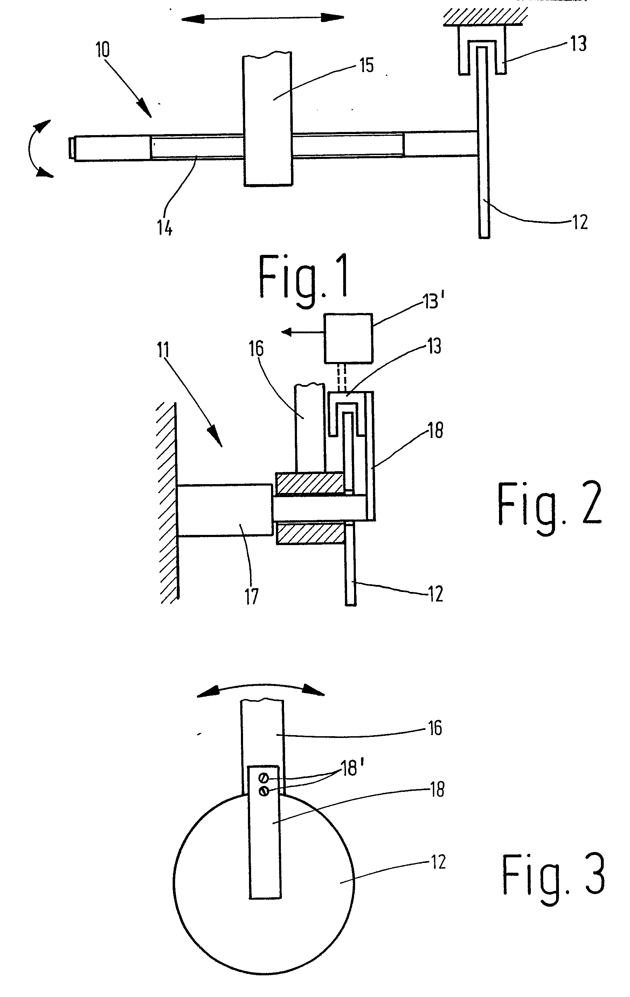

Abhängig vom Einsatzzweck werden Roboter ein- oder mehrachsig ausgeführt. Mehrachsige Roboter bestehen in der Regel aus einer Kombination von translatorischen Bewegungsachsen 10 (Fig. 1) und rotatorischen Bewegungsachsen 11 (Figuren 2, 3). Bei beiden lassen sich das erfindungsgemäße Verfahren und die entsprechende Vorrichtung einsetzen. Die Vorrichtung umfaßt, wie dies in den Abbildungen gezeigt ist, einen scheibenförmig ausgebildeten Datenträger 12, der mit der abzutastenden Achse mechanisch verbunden ist und einen Abtastkopf 13.

Figur 1 zeigt eine translatorische Bewegungsachse 10, die eine Antriebsspindel 14 aufweist. Auf der Antriebsspindel 14 läuft ein mit ihrem Gewinde in Eingriff stehender Ausleger 15, der in Richtung des Doppelpfei werden soll. Die Antriebsspindel 14 wird durch einen nicht gezeigten Motor gedreht, wobei die Drehung auf den Datenträger 12 übertragen wird. Dessen Drehung wiederum kann vom Abtastkopf 13 abgetastet werden.

Bei dieser Ausführungsform umfaßt der Datenträger 12 ein beschreibbares Medium (magnetisierbare oder optisch veränderbare Schicht), wie dies an sich bekannt ist. Nach dem Einbau der Anordnung in einen Roboter bzw. nach dessen Zusammenbau wird zunächst ein Kalibrierlauf durchgeführt, bei welchem der Antriebsmotor gesteuert (also nicht geregelt) betrieben wird, wobei gleichzeitig die Position bzw. die Positionsverschiebung des Auslegers 15 relativ zu einem unbewegten Teil des Roboters gemessen wird. Während der Verschiebung des Auslegers 15 durch die Drehung des Motors werden die gemessenen Positionen in Digitalwerte übersetzt und über eine geeignete Einschreibvorrichtung (magnetischer Schreibkopf bzw. Laserdiode) auf den Datenträger 12 übertragen. Dies kann z.B. dadurch geschehen, daß der Schreibkopf anstelle der Abtasteinrichtung 13 am Roboter montiert ist. Nach dem Kalibrierlauf wird dann die Schreibeinrichtung abgenommen und die Abtasteinrichtung 13 statt ihrer so montiert, daß sie die auf dem Datenträger 12 gespeicherten Informationen genau an der Stelle lesen kann, an der sie zuvor eingeschrieben wurden.

Bei der nachfolgenden Benutzung des Roboters können dann die ausgelesenen Digital-Daten entweder direkt von der Robotersteuerung verarbeitet oder aber nach einer D/A-Wandlung als Ist-Werte in einem Analog-Regelkreis verwendet werden. Wesentlich ist hierbei der Umstand, daß die auf dem Datenträger 12 gespeicherten Informationen direkt die Relativposition des Auslegers 15 wiederspiegeln, so daß z.B. Steigungsfehler im Gewinde der Spindel 14 kompensiert werden.

Bei der in Figur 2 dargestellten Erfassung einer Winkelmessung an einer rotatorischen Bewegungsachse 11 ist der Datenträger 12 starr mit einem Schwenkarm 16 verbunden, der auf einem Gelenkzapfen 17 gelagert ist. Der Abtastkopf 13 ist über einen Halter 18 und Befestigungsschrauben 18' fest mit dem Gelenkzapfen 17 verbunden. Die Relativbewegung zwischen dem Datenträger 12 und dem Abtastkopf 13 ist also direkt proportional dem Schwenkausschlag des Schwenkarmes 16, wie dies in Figur 3 gezeigt ist. Zum Beschreiben des Datenträgers 12 wird die Anordnung zunächst mit einem Schreibkopf anstelle des Abtastkopfes 13 versehen, der über die Schrauben 18' lösbar am Halter 18 festgesetzt ist. Anstelle des Schreibkopfes wird dann der Abtastkopf 13 eingesetzt. Die aus dem Abtastkopf 13 kommenden Signale können dann (wie in Figur 1 angedeutet) über eine entsprechende Abtastwandeleinheit 13', die einen D/A-Wandler umfassen, in ein Analogsignal umgewandelt werden, das zur Regelung eines (nicht gezeigten) die Bewegung auslösenden Elektromotors dient.

Bei den in den Figuren 1-3 gezeigten Ausführungsformen kann der Abtastkopf 13 mehrere Einzel-Abtasteinheiten umfassen, so daß mehrere Spuren auf dem Datenträger 12 gelesen werden können. Selbstverständlich ist in diesem Fall auch der (während des Kalibrierlaufes zu verwendende) Schreibkopf dementsprechend ausgebildet. Weiterhin kann insbesondere bei der in Figur 1 gezeigten Ausführungsform der Abtastkopf 13 ähnlich wie bei den an sich bekannten CD-Plattenspielern in Radialrichtung zum scheibenförmigen Datenträger 12 bewegt werden, so daß eine spiralförmige Spur (nach einem entsprechenden Beschreiben während des Kalibrierlaufes) ausgelesen und somit eine sehr weite Bewegungsamplitude des Auslegers 15 entsprechend einer Vielzahl von Umdrehungen der Spindel 14 mit hoher Auflösung meßbar ist. Hinsichtlich der dafür notwendigen exakten Ausrichtung des Abtastkopfes 13 hinsichtlich seiner radialen Positionierung wird auf den bekannten Stand der Technik verwiesen.

Besonders vorteilhaft wirkt sich die hier vorgesehene Möglichkeit des Einschreibens von tatsächlichen Positionen der Roboterachse auf das bereits eingebaute System dann aus, wenn Hysteresefehler zu korrigieren sind. In diesem Fall kann jeweils eine Datenspur für eine Bewegungsrichtung vorgesehen sein.

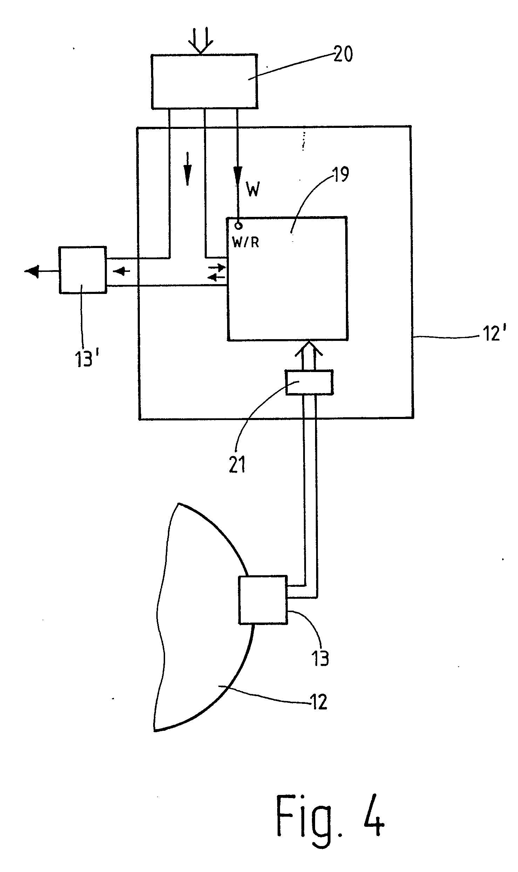

Bei einer anderen Ausführungsform der Erfindung, die in Figur 4 gezeigt ist, wird ein Datenträger 12 verwendet, der bereits "bespielt" ist. In diesem Fall wird dann ein externes Speichersystem 12' vorgesehen, das einen Halbleiterspeicher 19 (z.B. ein EPROM) sowie einen Adressengenerator 21 umfaßt. Während des Kalibrierlaufes werden dann die gemessenen Positionsdaten aus der (nicht gezeigten) Meßvorrichtung in eine Programmiereinheit 20 eingegeben, die zum einen ein Schreibsignal (W) in den Lese-/Schreibeingang (W/R) des Speichers 19 gibt, zum anderen digitale Positionsdaten in den Speicher 19 führt. Die von dem Datenträger 12 ausgelesenen Daten werden dem Adressengenerator 21 gleich zeitig als Digitalwerte zugeführt, der den Speicher 19 entsprechend anwählt. Dadurch wird jede Position des Datenträgers 12 in eine Adresse im Speicher 19 umgesetzt, so daß das aus der Programmiereinrichtung 20 kommende, der gemessenen Position entsprechende Datenwort in diese Adresse des Speichers 19 eingeschrieben wird. Nach dem Programmieren des Speichers 19 kann die Programmieranordnung 20 abgenommen werden und der Schreib-Leseeingang (W/R) des Speichers 19 auf "Lesen" gesetzt werden. Wenn nun der Datenträger 12 gegenüber der Abtasteinrichtung 13 verdreht wird. liest dieser die auf dem Datenträger 12 gespeicherten Informationen, die über den Adressengenerator 21 in eine Adressinformation für den Speicher 19 umgesetzt werden. Aus dem Speicher 19 werden dann die den entsprechenden Adressen zugeordneten eingespeicherten Positionswerte ausgegeben und können dann weiterverarbeitet bzw. z.B. in Analogwerte zur Regelung des (nicht gezeigten) Antriebsmotors verwendet werden. Auch für diese Ausführungsform der Erfindung eignen sich besonders CD-Platten.

## Ansprüche

1. Verfahren zur indirekten Wegmessung, insbesondere bei der (Weg-oder Winkel-) Positionierung von Werkzeug- oder Roboterachsen,
**dadurch gekennzeichnet,**
daß in einem Kalibrierlauf die Werkzeug- oder Roboterachse in die verschiedenen, zu messenden Positonen unter Überwachung durch ein externes Meßsystem gebracht, den gemessenen Positionen entsprechende Positions-Informationen in ein mit der Werkzeug- oder Roboterachse mechanisch verbundenes beschreib- und lesbares Informationsträgersystem eingespeichert und bei der aktuellen indirekten Wegmessung die gespeicherten Positions-Informationen wieder ausgelesen werden.

2. Verfahren nach Anspruch 1,
**dadurch gekennzeichnet,**
daß im Kalibrierlauf Zusatzinformationen, insbesondere zur Arbeitstaktsteuerung oder dergleichen der Werkzeug- oder Roboterachsen eingespeichert werden.

3. Vorrichtung zur indirekten Wegmessung, insbesondere bei der (Weg-, Winkel-) Positionierung von Werkzeug- oder Roboterachsen mit mindestens einem Informationsträgersystem (12, 12'), das mindestens abschnittsweise mit der Achse (11, 12) in Wirkverbindung steht und mit mindestens einer Abtasteinrichtung (13, 13') zum Auslesen einer im Informationsträgersystem (12, 12') gespeicherten Positionsinformation,
**dadurch gekennzeichnet,**
daß das Informationsträgersystem Speichereinrichtungen (12, 19) umfaßt, die derart ausgebildet sind, daß Positionsinformationen dann speicherbar sind, wenn das Informationsträgersystem an der Werkzeug- oder Roboterachse unter Herstellung der Wirkverbindung montiert ist.

4. Vorrichtung nach Anspruch 3,
**dadurch gekennzeichnet,**
daß die Speichereinrichtungen (12) als in einem Kalibrierlauf beschreibbarer Datenträger ausgebildet sind, der fest mit der Achse (11, 12) verbunden ist und über eine Schreibeinrichtung beschreibbar ist.

5. Vorrichtung nach Anspruch 4,
**dadurch gekennzeichnet,**
daß die Schreibeinrichtung abnehmbar befestigt und gegen die Abtasteinrichtung (13) im wesentlichen ohne Ortsverschiebung austauschbar ist.

6. Vorrichtung nach Anspruch 3,
**dadurch gekennzeichnet,**
daß das Informationsträgersystem einen beschriebenen Datenträger (12), einen in einem Kalibrierlauf beschreibbaren (Halbleiter-) Speicher (19) und einen Adressengenerator (21) für den Speicher (19) umfaßt, der mit der Abtasteinrichtung (13) zur Umsetzung der auf dem Datenträger (12) gespeicherten Informationen in Adressen verbunden ist, so daß bestimmte Speicherinhalte entsprechend bestimmten, vom Datenträger (12) ausgelesenen Informationen als Positionsdaten speicher- und auslesbar sind.

7. Vorrichtung nach einem der Ansprüche 3 bis 6,
**dadurch gekennzeichnet,**
daß der Datenträger (12) als optisch beschreib- und lesbare Kompaktdiskette (CD) ausgebildet ist.

8. Vorrichtung nach einem der Ansprüche 3 bis 7,
**dadurch gekennzeichnet,**
daß mehrere Abtasteinrichtungen (13) vorgesehen sind.

9. Vorrichtung nach einem der Ansprüche 4 bis 8,
**dadurch gekennzeichnet,**
daß die Abtasteinrichtung(en) (13) relativ zum Datenträger (13) bewegbar angeordnet ist (sind).

icht / Newly filed
ment déposé

10

15

13

14

12

## Fig. 1

13'

16

13

11

18

17

12

## Fig. 2

16

18'

18

12

## Fig. 3

Fig. 4